# EUROPEAN PATENT SPECIFICATION

(11) **EP 2 317 626 B1**
(45) Date of publication and mention of the grant of the patent: **20.12.2017**
(21) Application number: 09174253.6
(22) Date of filing: 27.10.2009
(51) Int. Cl.: A45F 5/02, A45C 15/00, H02N 2/18, H02J 7/32, H02J 7/02

(54) **Holster-integrated piezoelectric energy source for handheld electronic device**
In einen Halfter integrierte piezoelektrische Energiequelle für ein tragbares elektronisches Gerät
Source d'énergie piézoélectrique intégrée dans l'étui pour un dispositif électronique portable

(43) Date of publication of application: 04.05.2011
(73) Proprietor: BlackBerry Limited, Waterloo, ON N2K 0A7 (CA)
(72) Inventor: Winger, Lyall Kenneth, Waterloo Ontario N2L 3W8 (CA); Dikun, Raymond Michael, Waterloo Ontario N2L 5R9 (CA); Guthrie, Martin George Albert, Waterloo Ontario N2L 5R9 (CA); Marchand, Rene Pierre, Waterloo Ontario N2L 5R9 (CA); Rich, David Gerard, Waterloo Ontario N2L 5R9 (CA)
(74) Representative: Hanna Moore + Curley

(56) References cited:
- GB-A- 2 389 719
- US-A1- 2003 106 917
- US-A1- 2005 280 334
- US-A1- 2007 257 634
- US-A1- 2007 279 002
- US-A1- 2008 074 002

## Description

The present disclosure relates generally to energy sources for handheld electronic device. More particularly, the present disclosure relates to holster-integrated energy sources for handheld electronic devices.

Handheld electronic devices (HEDs) are typically equipped with a battery that requires recharging at regular intervals in order for the HED to remain functional. Although advances in battery technology have provided longer time periods between recharging the batteries, recharging is still required and can be inconvenient.

Some HEDs can include built-in piezoelectric energy sources; however the integration of piezoelectric members and circuitry into an HED can increase the dimensions of the HED, which goes against the trend of miniaturization of such devices.

Other approaches to using piezoelectric energy sources with HEDs include having a piezoelectric charge module that can be removably secured to an HED while the HED is not in use. This makes for a bulky HED/piezoelectric arrangement.

U.S. patent application publication no. 2007/257634 discloses a self-powered portable electronic device that uses piezoelectric ceramic fibres. The piezoelectric ceramic fibres harvest mechanical energy that is transformed into electricity, which is used to operate one or more features of the electronic device. The piezoelectric ceramic fibres may be in a structure of a portable electronic device, on a structure of a portable electronic device, or both. The piezoelectric ceramic fibers may be in an auxiliary device/structure associated with a portable device, on an auxiliary device/structure associated with a portable device, or both.

U.S. patent application publication no. 2008/074002 discloses a piezoelectric energy harvester. The piezoelectric harvester includes groups of piezoelectric elements mounted perpendicular to each other. This configuration enables the harvester to efficiently harvest mechanical energy regardless of the orientation of the energy harvester relative to a displacement axis of the harvester.

U.S. patent application publication no. 2007/279002 discloses a power source, charging system, and inductive receiver for mobile devices. A pad or similar base unit comprises a primary, which creates a magnetic field by applying an alternating current to a winding, coil, or any type of current carrying wire. A receiver comprises a means for receiving the energy from the alternating magnetic field and transferring it to a mobile or other device. The receiver can also comprise electronic components or logic to set the voltage and current to the appropriate levels required by the mobile device, or to communicate information or data to and from the pad. The system may also incorporate efficiency measures that improve the efficiency of power transfer between the charger and receiver.

U.S. patent application publication no. 2003/106917 discloses a rotational holster for an electronic device.

### GENERAL

The present teaching provides a holster as detailed in claim 1. Also provided is a system in accordance with claim 12. Advantageous features are provided in dependent claims. The following disclosure is generally directed to holster for a handheld electronic device, into which the HED can be inserted and withdrawn by a user. The holster is typically configured to retain the HED when the user inserts the HED into the holster, and is further configured to make the HED readily accessible for withdrawal by the user. For purposes of illustration, the HED is equipped with a rechargeable battery. The holster includes one or more piezoelectric elements that generate an input voltage, and further includes charging circuitry. The charging circuitry includes an electrical connector that is configured to electrically couple to the HED when the HED is inserted into the holster. As will be described below, the holster is configured to charge the rechargeable battery of the HED when the HED is inserted in the holster.
Generally, the present disclosure provides a holster for a HED, the holster may have integrated therein one or more piezoelectric elements and charging circuitry that can provide useful output voltage and current to the HED upon the HED being inserted in the holster to electrically connect the HED to the charging circuitry. The electrical connection may typically by way of a mating connector electrically couple the HED to the charging circuitry. The concepts described herein are not limited to any particular kind of electrical connection or connector, and can include, for example, tab-terminal-to-tab-terminal connections, plug-to-socket connections and spring-loaded-prong-to-blade connections. The output voltage and current can be used to charge the battery, to power the HED, at least in part, or both. (The concepts of power, energy, voltage and current are related to one another. In the discussion below, the concepts will typically be discussed in terms of voltages and currents.) The output voltage may be generated by harvesting vibration energy at the piezoelectric elements upon the holster being subjected to acceleration caused by a user carrying the holster when walking, running, or during any other suitable activity. The acceleration may cause the piezoelectric elements to deform, which generates the voltage in question. As will be understood by the skilled worker, the present disclosure is also applicable to portable docking stations for HEDs.

The HED can also be referred to as portable electronic device or a mobile electronic device and, it may be a two-way communication device with advanced data communication capabilities including the capability to communicate with other portable electronic devices or computer systems through a network of transceiver stations. The HED may also have the capability to allow voice communication. Depending on the functionality provided by the portable electronic device, it may be referred to as a data messaging device, a two-way pager, a cellular telephone with data messaging capabilities, a wireless Internet appliance, a personal area network device (e.g., Bluetooth™ devices) or a data communication device (with or without telephony capabilities). The portable electronic device may also be a portable device without wireless communication capabilities as a handheld electronic game device, digital photograph album, digital camera and the like.

In a first aspect, the present disclosure may provide a holster for a handheld electronic device. The holster may comprise: at least one piezoelectric element to generate an input voltage upon being deformed; and charging circuitry electrically connected to the at least one piezoelectric element. The charging circuitry may have an electrical connector. The charging circuitry may be to provide an output voltage to the electrical connector in accordance with the input voltage and in accordance with pre-determined charging circuit parameters. The electrical connector may be to connect to the handheld electronic device upon the electronic device being inserted into the holster, to provide the output voltage to the handheld device.

The holster can comprise a chamber for housing the at least one piezoelectric element. Each piezoelectric element can have a first portion fixedly secured to the chamber and a second portion movable with respect to the first portion. Each piezoelectric can be an elongated member. The holster can define a cavity having a cavity length along which the handheld electronic device can be slid in and out of the holster. Each elongated member can be substantially parallel to the cavity length. Each elongated member can be substantially perpendicular to the cavity length. The holster can define a housing for receiving the handheld electronic device, the holster can further comprise a fastening element secured to the housing, the fastening element being rotatable with respect to the housing to change an orientation of the housing with respect to the fastening element. The fastening element can includes a clip.

In a second aspect, the present disclosure may provide a system comprising a holster with a handheld device.

In a third aspect, the present disclosure may provide a holster for a handheld electronic device. The holster may comprise: at least one piezoelectric element to generate an input voltage upon being deformed; charging circuitry electrically connected to the at least one piezoelectric element; and a coil electrically connected to the charging circuitry. The charging circuitry may be to provide an output voltage to the coil in accordance with the input voltage and in accordance with pre-determined charging circuit parameters. The coil may be to inductively couple the charging circuitry to the handheld electronic device upon the handheld electronic device being inserted into the holster. The charging circuitry and the coil can define an assembly that has an assembly resonant frequency; and the at least one piezoelectric element can have a piezoelectric element resonant frequency. The assembly resonant frequency can be substantially equal to the piezoelectric element resonant frequency. The charging circuitry can comprise at least one capacitor.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limited to the scope of the embodiments described herein.

### BRIEF DESCRIPTION OF THE DRAWINGS

Embodiments of the present disclosure will now be described, by way of example only, with reference to the attached Figures, wherein:
Figure 1 shows a front view of an exemplary embodiment of the holster of the present disclosure;
Figure 2 shows a side view of the holster of Figure 1;
Figure 3 shows a side cross-sectional view of the holster of Figure 1;
Figure 4 shows a front cross-sectional view of the holster of Figure 1;
Figure 5A shows a block diagram depiction of an exemplary charging circuit;
Figure 5B shows another exemplary charging circuit;
Figure 5C shows yet another exemplary charging circuit;
Figure 6 shows a side cross-sectional view of another exemplary embodiment of the present disclosure;
Figure 7 shows a front cross-sectional view of the holster of Figure 6;
Figure 8 shows an exemplary arrangement of interleaved piezoelectric elements; and
Figure 9 shows block diagram representation of a handheld electronic device that can be used with the holster of the present disclosure.

### DESCRIPTION OF PREFERRED EMBODIMENTS

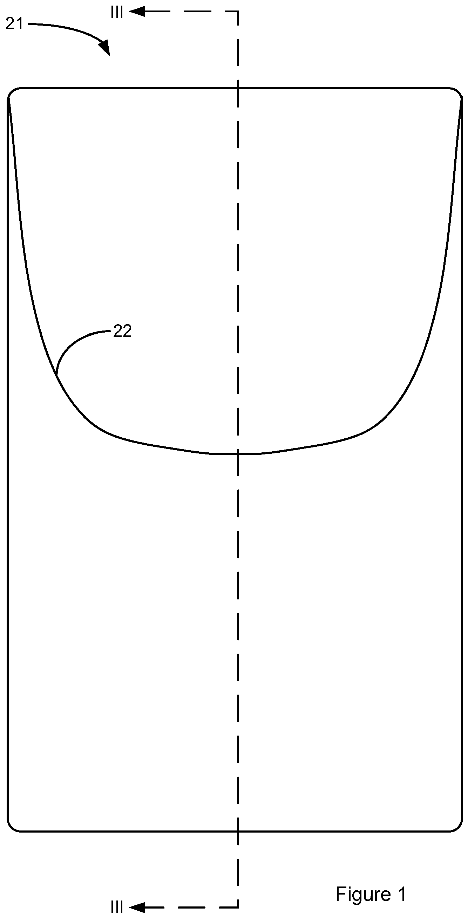

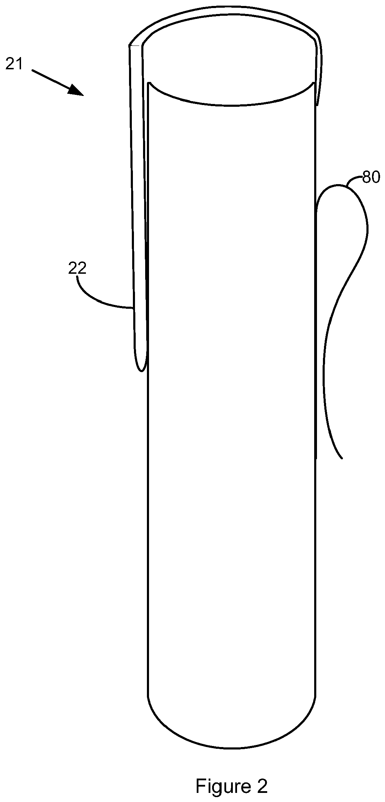

**Figure 1** shows a front view of an exemplary embodiment of a holster **21** of the present disclosure. **Figure 2** shows a side view of the holster **21.** The holster **21** can be used for any suitable handheld electronic device (HED) that runs on electricity, which is typically provided by a battery or by any other suitable electrical charge storage device such as, for example, a capacitor A flexible holster cover **22** is also shown at **Figs. 1** and **2****,** and serves to hold and secure the HED in the holster **21.** The holster **21** can have and exterior portion made of any suitable material (having any desirable aesthetic, electrical, durability, strength, or other characteristics or combinations of characteristics) such as, e.g., leather, nylon, etc. The holster cover **22** can be held closed through any suitable means such as, for example, a magnetic closure, a hook and loop closer, a snap-fit closure, etc. As will be understood by the skilled worker, holsters not having a cover are also within the scope of the present invention. A clip **80,** shown at **Figure 2****,** allows a user to secure the holster **21** to a belt, purse, pocket etc. As will be further be understood by the skilled worker, any other suitable fastening element such as, e.g., a loop for connecting to a belt can be used. Additionally, the holster of the present disclosure can also function without any fastening element. When present, the fastening element, in the present example, the clip **80,** can be rotatable with respect to the housing **82** of the holster, and to the user to which it is fastened, to permit a change in the orientation of housing with respect to the user. This variable orientation of the housing can allow the user to set the orientation in order to adjust the amount of vibration energy being harvested.

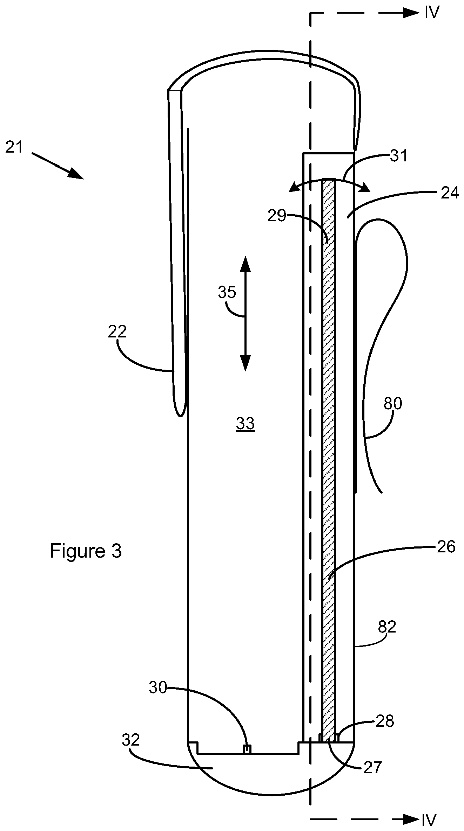

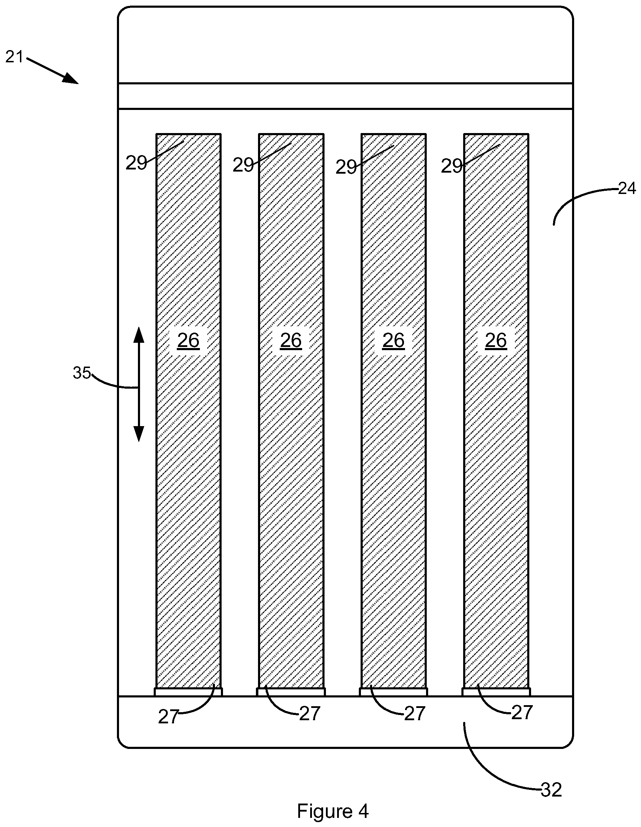

**Figure 3** shows a side cross-sectional view of the holster **21** taken along III-III of **Figure 1****.** As shown at **Figure 3****,** the holster **21** defines a cavity **33** along the length of which, the length direction being indicated by arrow **35,** a HED can be slid in and out of the holster. **Figure 3** also shows a chamber **24** that houses one or more piezoelectric element **26,** each of which is fixedly secured at a first portion **27** to the chamber **24** by a holder **28,** which can be any suitable type of clamp or holding device. Alternatively, any other suitable means to secure the first portion **27** to the chamber **24** can be used such as, e.g., adhesives, press-fits, snap fits, fasteners, etc. Each piezoelectric element **26** has a second portion **29,** which movable with respect to the first portion **27** and to the chamber **24,** upon the holster being accelerated in any suitable direction. As shown at **Figure 3****,** and at **Figure 4** described below, the piezoelectric element **26** is substantially parallel to the length of the cavity **33.**

**Figure 4** shows a front cross-sectional view of the holster **21** taken along line IV-IV of **Figure 3****.** As shown at **Figure 4****,** four piezoelectric elements **26** are contained in the chamber **24.** However, any suitable number of piezoelectric elements **26** can be used, including one piezoelectric element **26,** without departing from the scope of the present disclosure. If more than one piezoelectric elements **26** are present, they can be electrically connected to each other in parallel or in series, or in any suitable parallel/series configuration. The exemplary piezoelectric elements **26** are rectangular-shaped plates; however, this need not the case. Any suitably-shape piezoelectric elements can be used without departing from the scope of the present disclosure. For example, amongst others, disc-shaped, tube-shaped, and ring-shaped piezoelectric elements can also be used. The piezoelectric elements 26 can have any suitable dimensions. For example, the thickness can range from less than a tenth of a millimeter to several millimeters; and, the length and width can range from one to several millimeters. As will be understood by the skilled worker, the dimensions of the piezoelectric elements can be determined in accordance with, amongst other factors: (a) the choice of the piezoelectric material of the piezoelectric elements **26;** (b) the required voltage/current characteristics of the HED; and (c) the principal frequencies to which the holster **21** is subjected during the activity practiced by the user, at which energy harvesting is achieved. The concepts described herein are not necessarily limited to any particular number of piezoelectric elements **26,** or to any particular electrical connection of piezoelectric elements, or to any particular shape or dimension of piezoelectric elements, or to any combination thereof.

As will be understood by the skilled worker, piezoelectric materials can generate a voltage upon being subjected to deformation, such deformations including, for example, bending, twisting, compression, elongation, etc. The piezoelectric elements **26** are fabricated to undergo such deformations upon the holster being subjected to accelerations such as those encountered when the holster is with a person walking or otherwise moving about. Such deformations will also typically occur when the user is travelling, e.g., on a plane or car; or when the holster **21** sits atop a vibrating object such as a refrigerator or an air conditioning unit.

Upon the holster **21** being subjected to an acceleration, the portion of the piezoelectric element **26** that is not fixedly secured in the holder **28** (the first portion **27**)**,** can move with respect to the portion held in the holder **28.** The resulting deformation of the piezoelectric element 26 generates a voltage at surfaces of the piezoelectric material comprised in the piezoelectric element **26.** A double-arrowed arc **31** at **Figure 3** shows an exemplary movement that the second portion **29** can undergo upon the piezoelectric member **26** being accelerated.

Each piezoelectric element **26** is electrically connected to charging circuitry **32** disposed at the bottom region of the holster **21,** as shown at **Figs. 3** and **4****.** Alternatively, the charging circuitry **32** can be located at any other suitable region of the holster **21** without departing from the scope of the present disclosure. In some cases, charging circuitry could be integrated in the HED itself without departing from the scope of the present disclosure. The connection of each piezoelectric element **26** to the charging circuitry is typically done though a pair of conductors (not shown), with a first conductor connecting the charging circuitry **32** to a first surface of the piezoelectric material of the piezoelectric element **26,** and a second conductor connecting the charging circuitry **32** to a second surface of the piezoelectric material of the piezoelectric element **26.** The above-noted first and second surfaces of the piezoelectric material can be any surfaces across which a voltage is generated upon the piezoelectric element **26,** and the piezoelectric material itself, being deformed. The connection of the surfaces in question to their respective conductor can be achieved through any suitable electrode, defining any suitable pattern, formed on the surfaces.

The deformation of the piezoelectric elements **26** generates an input voltage that is provided to the charging circuitry **32.** The charging circuitry **32** has an electrical transfer means, for example an electrical connector **30,** that connects to the HED upon the HED being inserted in the holster **21.** Any suitable type of electrical connector can be used, such as, for example, a mini-USB connector, provided the HED includes a complementary connector to mate therewith. The charging circuitry **32** provides an output voltage to the HED in accordance with the input voltage and with pre-determined charging circuit parameters. As used herein, two elements are "in accordance with" one another when the value of one element corresponds to the value of another. For example, two elements may be 'in accordance with" one another when one is a function of the other, or when both vary in response to common factor. A charging circuit parameter is "pre-determined" in the sense that at least one aspect of the parameter is defined prior to charging. Such charging circuit parameters can include, for example, target output voltage and target output current. Any suitable type of charging circuitry can be used. The inputs to the design can include many factors such as, for example, input frequency, resonant frequency, frequency ranges, output voltage and currents etc., and the tradeoffs between these factors. Examples of such circuitry can be found in, amongst other references, the article by Y.-P. Liu et al. entitled Velocity-Controlled Piezoelectric Switching Energy Harvesting Device, proceedings of International Conference on Renewable Energy and Power Quality, Valencia, Spain, 15-17 April 2009.

Alternatively, the charging circuitry and the HED can include as an electrical transfer means inductive charging circuitry components to allow inductive charging of the HED by the piezoelectric elements. In such cases, as will be understood by the skilled worker, the connector **30** is not required. Rather, as will be described below, an induction coil can be used instead.

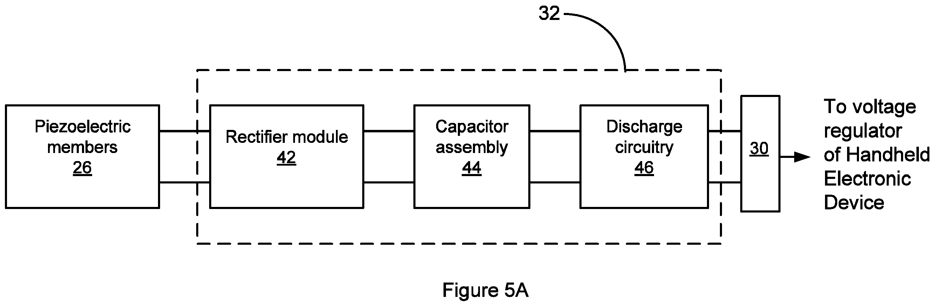

**Figure 5A** shows a block diagram of an exemplary charging circuitry **32** electrically connected to the piezoelectric members **26.** The charging circuitry **32** can include, as shown in the present exemplary embodiment, a rectifier module **42,** a capacitor assembly **44** and discharge circuitry **46.** The piezoelectric members **26** provide a time-varying input voltage (this voltage being output from the piezoelectric members **26** but being input to the charging circuitry **32**) that is input into the rectifier module **42.** In turn, the rectifier module **42** provides a rectified voltage to the capacitor assembly **42,** which can include one or more capacitors that are charged by the rectified voltage. The capacitor assembly **42** stores at least some of the energy harvested from the piezoelectric members **26.** This storage of energy can occur whether the HED is inserted in the holster or not. The discharge circuitry **46,** in accordance with pre-determined parameters, causes the capacitors of the capacitor assembly **44** to discharge and provides an output voltage to an HED electrically connected to the connector **30.** This output voltage is fed to a voltage regulator of the HED and can serve to power the HED while inserted in the holster **21,** to charge the battery of the HED, or both. The output voltage provided to the electrical connector **30** is in accordance with the input voltage generated by the piezoelectric members **26** in that the output voltage is a function of the input voltage. The connector **30** can be referred to as a coupling element that electrically connects the charging circuitry **32** to the HED. Alternatively, the connector **30** can also be referred to as an electrical transfer means that electrically connects the charging circuitry **32** to the HED.

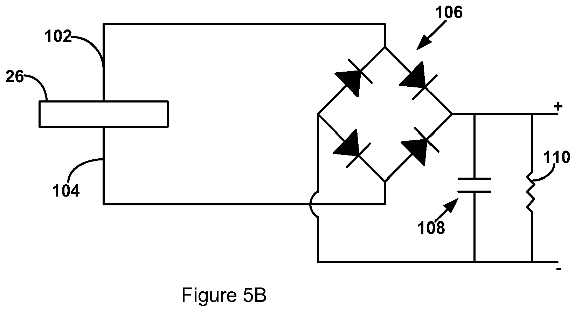

**Figure 5B** shows an exemplary charging circuitry having a full wave rectifier **106** electrically connected to a piezoelectric member **26** through connectors **102** and **104.** A capacitor **108** and a resistor **110,** connected in parallel to the rectifier **106** provide and output voltage to a HED (not shown).

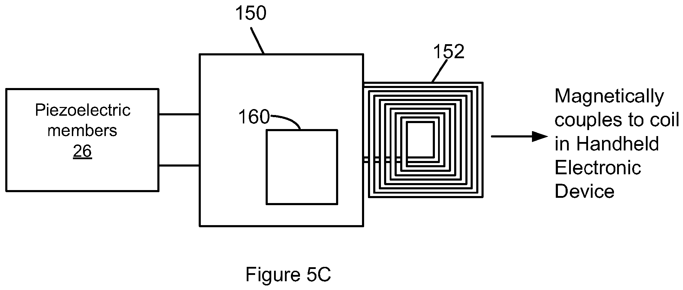

**Figure 5C** shows a block diagram of another exemplary charging circuitry **150** used to magnetically couple energy harvested by the piezoelectic members **26** to the HED. The charging circuitry **150** is electrically connected to the piezoelectric members **26,** which act as an AC source. The charging circuitry **150** can include capacitors, shown as capacitor circuitry **160,** electrically connected to a charge coil **152,** which is typically made of an electrically conductive material. As will be understood by the skilled worker, a magnetic core can be placed adjacent the charge coil **152** to vary the degree of magnetic coupling to the HED. The characteristics of the charge coil **152** and of the charging circuitry **150** can be chosen such that the assembly formed by the charge coil **152** and the charging circuitry **150** has a resonance frequency substantially equal to that of the piezoelectric members **26.** As will be understood by the skilled worker, a HED to be charged by the piezoelectric members/charging circuitry/coil assembly shown in the example of **Figure 5C****,** needs to include its own magnetic inductive coupling assembly, which can include, for example, a coil and a magnetic core, operatively connected to battery of the HED. The charge coil **152** can be referred to simply as a coil or as a magnetic induction coupling element that inductively couples the charging circuitry **150** to the HED upon the HED being inserted into the holster. The charge coil **152** can also be referred to as a near filed charge coil. Alternatively, the charge coil **152** can be referred to as an electrical transfer means that is electrically connected to the charging circuitry **152.** The charge coil can have any suitable shape such as, for example square, round, elliptical shapes, and include any number of turns.

The holster of present disclosure can itself include a rechargeable battery that can be recharged upon the holster, and its piezoelectric elements, being subjected to vibrations. In such embodiments, the HED recharges its own battery from the holster's battery upon the HED being inserted into the holster. As such, a user carrying the holster will recharge the holster's battery even when the HED is out of the holster.

The piezoelectric element **26** can include a laminar arrangement of a substrate and one or more piezoelectric layers. The substrate can be made of any suitable material such as, e.g., aluminum, steel, silicon nitride, etc., and the piezoelectric material can include any suitable material such as, e.g., lead zirconate titanate (PZT). The piezoelectric material can be formed on the substrate by slurry deposition or by any other suitable methods. Alternatively, the piezoelectric element **26** can be produced without a substrate. The piezoelectric element 26 can include a plurality of piezoelectric layers. Each of these piezoelectric layers can be substantially similar to the others, therefore having similar mechanical and electrical properties. Alternatively, each layer can be different from some of the others in terms of, for example, composition, and thickness, therefore having different mechanical and electrical properties. In such a case, a first piezoelectric layer could have a frequency response different than that of another different piezoelectric layer, allowing for the harvest of vibration energy at different frequencies.

Although the piezoelectric elements **26** of the embodiment of the holster **21** are elongated members fixedly secured to chamber **24** at their first end **27** in a cantilever arrangement. For example, elongated piezoelectric beams fixedly secured to the chamber **24** at their opposite ends, with their mid-sections undergoing movement, and deformation, upon the holster being accelerated, are examples not being part of the invention. As a further example, disc-shaped piezoelectric elements having their perimeter portion secured to the chamber **24** and their centre portion moving undergoing movement, and deformation, upon the holster being accelerated, are also further examples. Additionally, as will be understood by the skilled worker, the piezoelectric voltage characteristics can be adjusted by fixing a weight to a portion of the piezoelectric element undergoing movement constitutes anothe example.

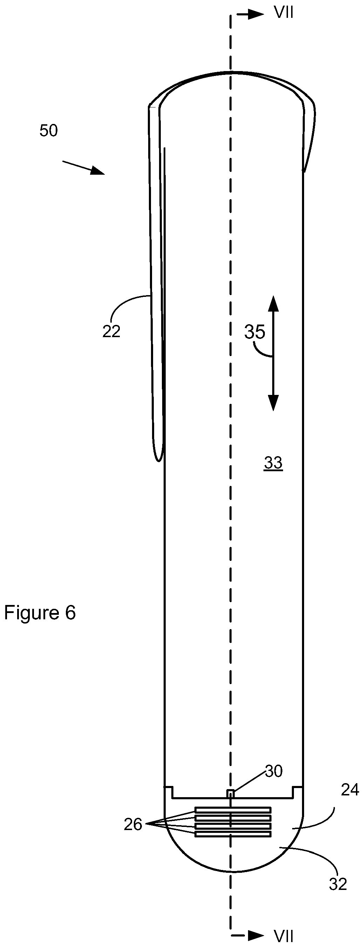

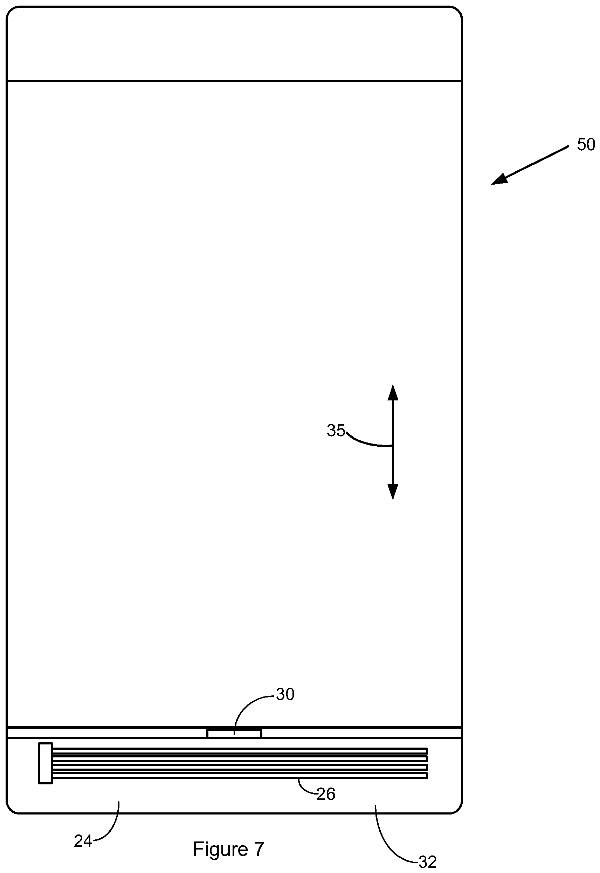

**Figure 6** shows a side cross-sectional view of another exemplary embodiment of a holster **50** of the present disclosure. **Figure 7** shows a front cross-sectional view of the holster **50** taken along the line VII-VII of **Figure 6****.** In the holster **50,** the piezoelectric elements **26** are contained in a chamber **24** at the bottom region of the holster **50.** The charging circuit **32** is also formed at the bottom region of the holster **50.** As in the holster **21** described above, the charging circuitry **32** includes a connector **30** that connects to a HDE upon the HED being inserted in the holster **50.** As in the holster **21,** the holster **50** also defines a cavity **33** along the length of which (arrow **35**) a HED can be slid in and out. In the holster **50** the piezoelectric members **26** are substantially perpendicular to the length of the holster, the direction of the length being indicated by the arrow As will be understood by the skilled worker, holsters with an open, or partly open, wall are also within the scope of the present disclosure.

As will be understood by the skilled worker, a holster with multiple groups of piezoelectric elements disposed in corresponding multiple compartment is also a further example. For example, although not shown, a holster having a first group of piezoelectric elements oriented along the insertion direction of a HED, that is, a direction such as direction **35** at **Figures 3** and **6****,** and having a second group of piezoelectric elements oriented perpendicularly to the first group of piezoelectric elements, is a further example. The first and second groups of piezoelectric elements could also be disposed in a same compartment.

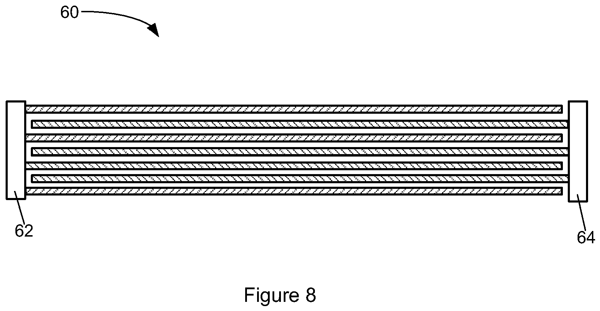

**Figure 8** shows an exemplary embodiment of an arrangement **60** of piezoelectric elements **26** that can be integrated into a holster. The arrangement **60** includes a first comb **62** of piezoelectric elements, and a second comb **64** of piezoelectric elements. The first and second combs **62** and **64** are interleaved and, although not shown, can be electrically connected to any suitable charging circuitry such as charging circuitry **32** described above. As will be understood by the skilled worker, the arrangement **60** can provide enhanced voltage while maintaining relatively small dimensions of the compartment in which they are housed.

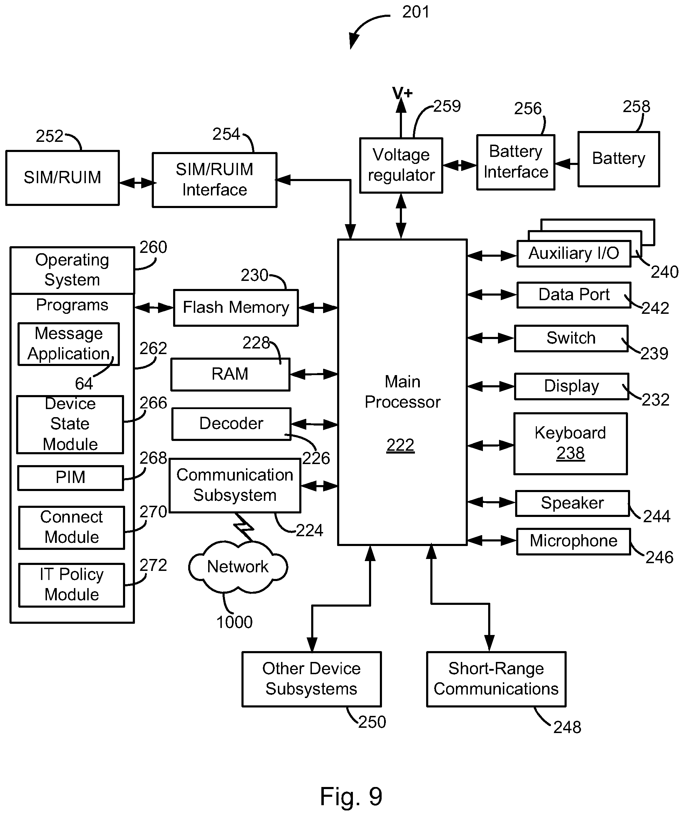

Referring **Figure 9****,** there is shown therein a block diagram of an exemplary embodiment of a HED **201** that can be combined with the holster of the present disclosure, exemplified in embodiment **21** and **50** above.

The HED **201** includes a number of components such as the processor **222** that controls the overall operation of the HED **201.** Communication functions, including data and voice communications, are performed through a communication subsystem **224.** Data received by the HED **201** can be decompressed and decrypted by a decoder **226,** operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem **224** receives messages from and sends messages to a wireless network **1000.** In this exemplary embodiment of the HED **201,** the communication subsystem **224** is configured in accordance with the Global System for Mobile Communication (GSM) and General Packet Radio Services (GPRS) standards. The GSM/GPRS wireless network is currently used worldwide. New standards such as Enhanced Data GSM Environment (EDGE) and Universal Mobile Telecommunications Service (UMTS) & LTE are believed to have similarities to the network behavior described herein, and it will also be understood by persons skilled in the art that the embodiments described herein are intended to use any other suitable standards that are developed in the future. The wireless link connecting the communication subsystem **224** with the wireless network **1000** represents one or more different Radio Frequency (RF) channels, operating according to defined protocols specified for GSM/GPRS communications. With newer network protocols, these channels are capable of supporting both circuit switched voice communications and packet switched data communications.

Although the wireless network **1000** associated with the HED **201** is a GSM/GPRS wireless network in one exemplary implementation, other wireless networks may also be associated with the HED **201** in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ WiMax network communication systems. Examples of other voice-centric data networks include Personal Communication Systems (PCS) networks like GSM and Time Division Multiple Access (TDMA) systems. The processor **222** also interacts with additional subsystems such as a Random Access Memory (RAM) **228,** a flash memory **230,** a display **232,** a keyboard **238,** a switch **239,** an auxiliary input/output (I/O) subsystem **240,** a data port **242,** a speaker **244,** a microphone **246,** short-range communications **248,** a camera **300,** and other device subsystems **250.** The DSA **100** described above can be used in the switch **239,** or the keyboard **238,** or in the camera **300,** or in any combination of the switch **239,** the keyboard **238** and the camera **300.**

Some of the subsystems of the HED **201** perform communication-related functions, whereas other subsystems may provide "resident" or on-device functions. By way of example, the keyboard **238** may be used for both communication-related functions, such as entering a text message for transmission over the network **1000,** and device-resident functions such as a calculator or task list.

The HED **201** can send and receive communication signals over the wireless network **1000** after network registration or activation procedures have been completed. Network access is associated with a subscriber or user of the HED **201.** To identify a subscriber according to the present embodiment, the HED **201** uses a SIM/RUIM card **252** (i.e. Subscriber Identity Module or a Removable User Identity Module) inserted into a SIM/RUIM interface **254** for communication with a network such as the network **1000.** The SIM/RUIM card **252** is one type of a conventional "smart card" that can be used to identify a subscriber of the HED **201** and to personalize the HED **201,** among other things. In the present embodiment the HED **201** is not fully operational for communication with the wireless network **1000** without the SIM/RUIM card **252.** By inserting the SIM/RUIM card **252** into the SIM/RUIM interface **254,** a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card **252** includes a processor and memory for storing information. Once the SIM/RUIM card **252** is inserted into the SIM/RUIM interface **254,** it is coupled to the processor **222.** In order to identify the subscriber, the SIM/RUIM card **252** can include some user parameters such as an International Mobile Subscriber Identity (IMSI). An advantage of using the SIM/RUIM card **252** is that a subscriber is not necessarily bound by any single physical mobile electronic device. The SIM/RUIM card **252** may store additional subscriber information for a HED as well, including datebook (or calendar) information and recent call information. Alternatively, user identification information can also be programmed into the flash memory **230.** The HED **201** can also be enabled to receive additional memory cards. For example, memory card slots (not shown) can be provided in the HED **201** to receive such cards.

The HED **201** is a battery-powered device and includes a battery interface **256** for receiving a battery pack containing one or more rechargeable battery cells **258,** and associated control circuitry (not shown) that, in some embodiments, can interface with the battery interface **256.** The battery pack has a form factor and contact arrangement suited to the particular handheld electronic device. In at least some embodiments, the battery **258** can be a smart battery with an embedded microprocessor. The battery interface **256** is coupled to a voltage regulator **259,** which assists the battery **258** in providing voltage V+ to the HED **201.** Additionally, the voltage regulator **259** connects, through an HED connector formed in at the HED **201,** to the connector 30 shown, e.g., at Figure 3, to receive a voltage from the discharge circuitry **46** of the charging circuitry **32** exemplified at Figure 5. As described below, the HED connector can be a data port **242.** Although current technology makes use of a battery, alternatives to batteries, such as capacitors, or future technologies such as micro fuel cells may provide the power to the HED **201.** The concepts described herein are not necessarily limited to any particular kind of battery, or to any particular battery chemistry, or to batteries that use energy storage elements or techniques other than or in addition to chemical energy storage. On the contrary, the concepts described herein may be applicable to a variety of chargeable or rechargeable power packs, including those that are distinct from conventional batteries.

The HED **201** also includes an operating system **260** and software components **262** which are described in more detail below. The operating system **260** and the software components **262** that are executed by the processor **222** are typically stored in a persistent store such as the flash memory **230,** which may alternatively be a read-only memory (ROM) or similar storage element (not shown). Those skilled in the art will appreciate that portions of the operating system **260** and the software components **262,** such as specific software applications **264, 266, 268, 270** and **272,** or parts thereof, may be temporarily loaded into a volatile store such as the RAM **228.** Other software components can also be included, as is well known to those skilled in the art.

The subset of software components **262** that control basic device operations, including data and voice communication applications, will normally be installed on the HED **201** during its manufacture. Other software applications include a message application **264** that can be any suitable software program that allows a user of the HED **201** to send and receive electronic messages. Various alternatives exist for the message application **264** as is well known to those skilled in the art. Messages that have been sent or received by the user are typically stored in the flash memory **230** of the HED **201** or some other suitable storage element in the HED **201.** In at least some embodiments, some of the sent and received messages may be stored remotely from the HED **201** such as in a data store of an associated host system that the HED **201** communicates with.

The software components **262** can further include a device state module **266,** a Personal Information Manager (PIM) **268,** and other suitable modules (not shown). The device state module **266** provides persistence, i.e. the device state module **266** ensures that important device data is stored in persistent memory, such as the flash memory **230,** so that the data is not lost when the HED **201** is turned off or loses power.

The PIM **268** includes functionality for organizing and managing data items of interest to the user, such as, but not limited to, e-mail, contacts, calendar events, voice mails, appointments, and task items. The PIM **268** has the ability to send and receive data items via the wireless network **1000.** PIM data items may be seamlessly integrated, synchronized, and updated via the wireless network **1000** with the HED subscriber's corresponding data items stored or associated, or both, with a host computer system. This functionality creates a mirrored host computer on the HED **201** with respect to such items. This can be particularly advantageous when the host computer system is the HED subscriber's office computer system.

The software components **262** also include a connect module **270,** and an information technology (IT) policy module **272.** The connect module **270** implements the communication protocols that are required for the HED **201** to communicate with the wireless infrastructure and any host system, such as an enterprise system, that the HED **201** is authorized to interface with.

The connect module **270** includes a set of APIs that can be integrated with the HED **201** to allow the HED **201** to use any number of services associated with the enterprise system. The connect module **270** allows the HED 201 to establish an end-to-end secure, authenticated communication pipe with the host system. A subset of applications for which access is provided by the connect module **270** can be used to pass IT policy commands from the host system to the HED **201.** This can be done in a wireless or wired manner. These instructions can then be passed to the IT policy module **272** to modify the configuration of the HED **201.** Alternatively, in some cases, the IT policy update can also be done over a wired connection.

Other types of software applications can also be installed on the HED **201.** These software applications can be third party applications, which are added after the manufacture of the HED **201.** Examples of third party applications include games, calculators, utilities, etc.

The additional applications can be loaded onto the HED **201** through at least one of the wireless network **1000,** the auxiliary I/O subsystem **240,** the data port **242,** the short-range communications subsystem **248,** or any other suitable device subsystem **250.** This flexibility in application installation increases the functionality of the HED **201** and may provide enhanced on-device functions, communication-related functions, or both. For example, secure communication applications may enable electronic commerce functions and other such financial transactions to be performed using the HED **201.**

The data port **242** enables a subscriber to set preferences through an external device or software application and extends the capabilities of the HED **201** by providing for information or software downloads to the HED **201** other than through a wireless communication network. The alternate download path may, for example, be used to load an encryption key onto the HED **201** through a direct and thus reliable and trusted connection to provide secure device communication.

The data port **242** can be any suitable port that enables data communication between the HED **201** and another computing device. The data port **242** can be a serial or a parallel port. In some instances, the data port **242** can be a USB port that includes data lines for data transfer and a supply line that can provide a charging current to charge the battery **258** of the HED **201.**

The short-range communications subsystem **248** provides for communication between the HED **201** and different systems or devices, without the use of the wireless network **1000.** For example, the short-range communications subsystem **248** may include an infrared device and associated circuits and components for short-range communication. Examples of short-range communication standards include standards developed by the Infrared Data Association (IrDA), Bluetooth, and the 802.11 family of standards developed by IEEE.

Synchronization of files and data between the HED **201** and another computing device can be achieved over the wireless network **1000,** through the short-range communications system **248,** or through a direct connection between the data port **242** of the HED **201** and the other computing device. Synchronization causes the most recent version of files and data to be mirrored on either the HED or the other computing device. As used herein, synchronization also refers to the downloading or uploading of pre-selected files from one device to the other. Synchronization of files and data can be initiated by the user of the device whenever a suitable connection between the HED **201** and another computing device, such as a home computer, is detected, or can occur automatically when a connection is detected. A synchronization application, stored in the HED **201** or the other computing device, or both, can determine the file and data types to be synchronized, the frequency of synchronization, and other parameters, appropriate to the particular synchronization algorithm implemented by the synchronization application.

In use, a received signal such as a text message, an e-mail message, or web page download is processed by the communication subsystem **224** and input to the processor **222.** The processor **222** then processes the received signal for output to the display **232** or alternatively to the auxiliary I/O subsystem **240.** A subscriber may also compose data items, such as e-mail messages, for example, using the keyboard **238,** and, possibly, the auxiliary I/O subsystem **240.** The auxiliary I/O subsystem **240** may include devices such as: a mouse, track ball, infrared fingerprint detector, or a roller wheel with dynamic button pressing capability. A composed item may be transmitted over the wireless network **1000** through the communication subsystem **224.**

For voice communications, the overall operation of the HED **201** is substantially similar, except that the received signals are output to the speaker **244,** and signals for transmission are generated by the microphone **246.** Alternative voice or audio I/O subsystems, such as a voice message recording subsystem, can also be implemented on the HED **201.** Although voice or audio signal output is accomplished primarily through the speaker **244,** the display **232** can also be used to provide additional information such as the identity of a calling party, duration of a voice call, or other voice call related information.

In the preceding description, for purposes of explanation, numerous details are set forth in order to provide a thorough understanding of the embodiments of the disclosure. However, it will be apparent to one skilled in the art that these specific details are not required in order to practice the disclosure. In other instances, well-known electrical structures and circuits are shown in block diagram form in order not to obscure the disclosure. For example, specific details are not provided as to whether the embodiments of the disclosure described herein are implemented as a software routine, hardware circuit, firmware, or a combination thereof.

The concepts described above may realize one or more advantages. Recharging of a battery in an HED can be very convenient for a user, as the recharging can take place automatically when the user inserts the HED into the holster. The user need not even be aware that recharging is occurring. Further, because the holster may be secured to the user (such as at the user's pocket or belt), the holster may be in motion as the user is in motion, and the piezoelectric elements may generate energy, which can be stored for recharging, even if the HED itself is stationary. The holster can harvest energy whether the HED is inserted in the holster or not. Some embodiments described above do not significantly add to the dimensions, bulk or weight of the HED. To the extent that there is any addition to the dimensions, bulk or weight of the holster, this addition is less likely to be noticed by or be an inconvenience to the user. A further potential benefit is that the holster can perform at least two functions at the same time: retaining the HED for access by the user, and coupling the piezoelectric charging circuitry to the HED when the HED is not in use. In some embodiments, inductive electrical coupling between the HED and the holster may enhance the convenience to the user by omitting a need for a wired electrical coupling between the HED and the holster.

The above-described embodiments of the disclosure are intended to be examples only. The scope of the disclosure is defined solely by the claims appended hereto.

## Claims

1. A holster (21) for a handheld electronic device into which the handheld electronic device can be inserted and withdrawn by a user, the holster (21) comprising an integrated energy source for the handheld electronic device, the holster comprising:
a plurality of piezoelectric elements (26) to generate an input voltage upon being deformed in response to vibration of the holster;
a chamber (24) for housing the plurality of piezoelectric elements (26), each piezoelectric element of the plurality of piezoelectric elements (26) having a first portion (27) fixedly secured to the chamber (24) and a second portion (29) movable with respect to the first portion (27), wherein the plurality of piezoelectric elements are arranged in a first comb (62) of piezoelectric elements and in a second comb (64) of piezoelectric elements, the first comb and the second comb of piezoelectric elements being interleaved with respect to each other;
charging circuitry (32) electrically connected to the plurality of piezoelectric elements (26); and
electrical transfer means electrically connected to the charging circuitry (32), the charging circuitry (32) being configured to provide an output voltage to the electrical transfer means in accordance with the input voltage and in accordance with pre-determined charging circuit parameters, the electrical transfer means configured to electrically couple to the handheld electronic device upon the handheld electronic device being inserted into the holster (21) to charge a rechargeable battery of the handheld electronic device.

2. The holster (21) of claim 1 wherein the electrical transfer means comprises an electrical connector (30), the electrical connector adapted to connect to the handheld electronic device upon the handheld electronic device being inserted into the holster (21).

3. The holster (21) as in claim 1 wherein the electrical transfer means comprises a coil (152), the coil adapted to inductively couple the charging circuitry to the handheld electronic device upon the handheld electronic device being inserted into the holster (21).

4. The holster (21) of claim 3 wherein:
the charging circuitry (150) and the coil (152) define an assembly having an assembly resonant frequency; and
each one of the piezoelectric elements of the plurality of piezoelectric elements (26) have a piezoelectric element resonant frequency, the assembly resonant frequency being substantially equal to the piezoelectric element resonant frequency.

5. The holster of claim 4 wherein the charging circuitry includes at least one capacitor (160).

6. The holster (21) of claim 1, wherein each piezoelectric element (26) is an elongated member.

7. The holster (21) of claim 6 wherein the holster (21) defines a cavity (33) having a cavity length along which the handheld electronic device can be slid in and out of the holster (21).

8. The holster (21) of claim 7 wherein each elongated member is substantially parallel to the cavity length.

9. The holster (21) of claim 7 wherein each elongated member is substantially perpendicular to the cavity length.

10. The holster (21) of any preceding claim wherein the holster (21) defines a housing (82) for receiving the handheld electronic device, the holster (21) further comprising a fastening element (80) secured to the housing, the fastening element (80) adapted to be rotatable with respect to the housing (82) to change an orientation of the housing (82) with respect to the fastening element (80).

11. The holster (21) of claim 10 wherein the fastening element includes a clip (80).

12. A system comprising the holster (21) as in any preceding claim and the handheld device.

## Patentansprüche

1. Holster (21) für eine tragbare bzw. handhaltbare elektronische Vorrichtung, in das die tragbare elektronische Vorrichtung durch einen Nutzer eingeführt und entnommen werden kann, wobei das Holster (21) eine integrierte Energiequelle für die tragbare elektronische Vorrichtung aufweist, wobei das Holster aufweist:
eine Vielzahl von piezoelektrischen Elementen (26), um bei einer Verformung als Reaktion auf eine Vibration des Holsters eine Eingangsspannung zu erzeugen;
eine Kammer (24) zum Beherbergen der Vielzahl von piezoelektrischen Elementen (26), wobei jedes piezoelektrische Element aus der Vielzahl der piezoelektrischen Elemente (26) einen ersten Abschnitt (27), der fest an der Kammer (24) gesichert ist, und einen zweiten Abschnitt (29), der bezüglich des ersten Abschnitts (27) bewegbar ist, hat, wobei die Vielzahl der piezoelektrischen Elemente in einem ersten Kamm (62) von piezoelektrischen Elementen und in einem zweiten Kamm (64) von piezoelektrischen Elementen angeordnet sind, wobei der erste Kamm und der zweite Kamm von piezoelektrischen Elementen zueinander verschachtelt sind;
eine Ladungsschaltung (32), die elektrisch mit der Vielzahl von piezoelektrischen Elementen (26) verbunden ist; und
elektrische Übertragungseinrichtungen, die elektrisch mit der Ladungsschaltung (32) verbunden sind, wobei die Ladungsschaltung (32) eingerichtet ist, den elektrischen Übertragungseinrichtungen eine Ausgangsspannung gemäß der Eingangsspannung und gemäß vorgegebener Ladungsschaltungsparameter bereitzustellen, wobei die elektrischen Übertragungseinrichtungen eingerichtet sind, sich elektrisch mit der tragbaren elektronischen Vorrichtung beim Einführen der tragbaren elektronischen Vorrichtung in das Holster (21) zu verbinden, um eine wiederaufladbare Batterie der tragbaren elektronischen Vorrichtung zu laden.

2. Holster (21) nach Anspruch 1, wobei die elektrische Übertragungseinrichtung einen elektrischen Konnektor (30) aufweist, wobei der elektrische Konnektor eingerichtet ist, sich beim Einführen der tragbaren elektronischen Vorrichtung in das Holster (21) mit der tragbaren elektronischen Vorrichtung zu verbinden.

3. Holster (21) nach Anspruch 1, wobei die elektrische Übertragungseinrichtung eine Spule (152) aufweist, wobei die Spule eingerichtet ist, die Ladungsschaltung beim Einführen der tragbaren elektronischen Vorrichtung in das Holster (21) induktiv an die tragbare elektronische Vorrichtung zu koppeln.

4. Holster (21) nach Anspruch 3, wobei:
die Ladungsschaltung (150) und die Spule (152) eine Anordnung mit einer Anordnungsresonanzfrequenz definieren; und
jedes der piezoelektrischen Elemente aus der Vielzahl von piezoelektrischen Elementen (26) eine piezoelektrische Elementresonanzelementfrequenz hat, wobei die Anordnungsresonanzfrequenz im Wesentlichen gleich der Resonanzfrequenz des piezoelektrischen Elements ist.

5. Holster nach Anspruch 4, wobei die Ladungsschaltung zumindest einen Kondensator (160) umfasst.

6. Holster (21) nach Anspruch 1, wobei jedes piezoelektrische Element (26) ein längliches Glied ist.

7. Holster (21) nach Anspruch 6, wobei das Holster (21) eine Kavität (33) mit einer Kavitätslänge definiert, entlang welcher die tragbare elektronische Vorrichtung in das Holster (21) hinein- und aus diesem herausgeschoben werden kann.

8. Holster (21) nach Anspruch 7, wobei jedes längliche Glied im Wesentlichen parallel zu der Kavitätslänge ist.

9. Holster (21) nach Anspruch 7, wobei jedes längliche Glied im Wesentlichen senkrecht zu der Kavitätslänge ist.

10. Holster (21) nach einem der vorstehenden Ansprüche (21), wobei das Holster (21) ein Gehäuse (82) zum Aufnehmen der tragbaren elektronischen Vorrichtung definiert, wobei das Holster (21) ferner ein an dem Gehäuse festgelegtes Befestigungselement (80) aufweist, wobei das Befestigungselement (80) eingerichtet ist, bezüglich des Gehäuses (82) drehbar zu sein, um eine Ausrichtung des Gehäuses (82) bezüglich des Befestigungselements (80) zu verändern.

11. Holster (21) nach Anspruch 10, wobei das Befestigungselement einen Clip (80) umfasst.

12. System, aufweisend das Holster (21) nach einem der vorstehenden Ansprüche und die tragbare Vorrichtung.

## Revendications

1. Etui (21) pour un dispositif électronique portable, dans lequel le dispositif électronique portable peut être inséré et retiré par un utilisateur, l'étui (21) comprenant une source d'énergie intégrée pour le dispositif électronique portable, l'étui comprenant :
une pluralité d'éléments piézoélectriques (26) pour générer une tension d'entrée lorsqu'ils sont déformés en réponse à une vibration de l'étui ;
une chambre (24) pour renfermer la pluralité d'éléments piézoélectriques (26), chaque élément piézoélectrique de la pluralité d'éléments piézoélectriques (26) comportant une première partie (27) fermement fixée à la chambre (24) et une deuxième partie (29) mobile par rapport à la première partie (27), la pluralité d'éléments piézoélectriques étant agencés en un premier peigne (62) d'éléments piézoélectriques et en un deuxième peigne (64) d'éléments piézoélectriques, le premier peigne et le deuxième peigne d'éléments piézoélectriques étant entrelacés l'un par rapport à l'autre ;
des circuits de charge (32) électroniquement connectés à la pluralité d'éléments piézoélectriques (26) ; et
des moyens de transfert électrique électriquement connectés aux circuits de charge (32), les circuits de charge (32) étant configurés de façon à délivrer une tension de sortie aux moyens de transfert électrique en fonction de la tension d'entrée et en fonction de paramètres de circuits de charge prédéterminés, les moyens de transfert électrique étant configurés de façon à être électriquement couplés au dispositif électronique portable lorsque le dispositif électronique portable est inséré dans l'étui (21) afin de charger une batterie rechargeable du dispositif électronique portable.

2. Etui (21) selon la revendication 1, dans lequel les moyens de transfert électrique comprennent un connecteur électrique (30), le connecteur électrique étant adapté de façon à connecter le dispositif électronique portable lorsque le dispositif électronique portable est inséré dans l'étui (21).

3. Etui (21) selon la revendication 1, dans lequel les moyens de transfert électrique comprennent un enroulement (152), l'enroulement étant adapté de façon à coupler par induction les circuits de charge au dispositif électronique portable lorsque le dispositif électronique portable est inséré dans l'étui (21).

4. Etui (21) selon la revendication 3, dans lequel :
les circuits de charge (150) et l'enroulement (152) définissent un ensemble ayant une fréquence de résonance d'ensemble ; et
chacun des éléments piézoélectriques de la pluralité d'éléments piézoélectriques (26) a une fréquence de résonance d'élément piézoélectrique, la fréquence de résonance de l'ensemble étant sensiblement égale à la fréquence de résonance de l'élément piézoélectrique.

5. Etui selon la revendication 4, dans lequel les circuits de charge comprennent au moins un condensateur (160) .

6. Etui (21) selon la revendication 1, dans lequel chaque élément piézoélectrique (26) est un élément allongé.

7. Etui (21) selon la revendication 6, dans lequel l'étui (21) définit une cavité (33) ayant une longueur de cavité le long de laquelle le dispositif électronique portable peut être amené à coulisser vers l'intérieur et vers l'extérieur de l'étui (21).

8. Etui (21) selon la revendication 7, dans lequel chaque élément allongé est sensiblement parallèle à la longueur de cavité.

9. Etui (21) selon la revendication 7, dans lequel chaque élément allongé est sensiblement perpendiculaire à la longueur de cavité.

10. Etui (21) selon l'une quelconque des revendications précédentes, dans lequel l'étui (21) définit un boîtier (82) pour recevoir le dispositif électronique portable, l'étui (21) comprenant de plus un élément de fixation (80) fixé au boîtier, l'élément de fixation (80) étant adapté de façon à pouvoir tourner par rapport au boîtier (82), de façon à changer une orientation du boîtier (82) par rapport à l'élément de fixation (80).

11. Etui (21) selon la revendication 10, dans lequel l'élément de fixation comprend une attache (80).

12. Système comprenant l'étui (21) selon l'une quelconque des revendications précédentes et le dispositif portable.
